Europäisches Patentamt

European Patent Office

Office européen des brevets

(11) Numéro de publication: **0 296 951 B1**

# FASCICULE DE BREVET EUROPEEN

(45) Date de publication de fascicule du brevet: **30.12.92** (51) Int. Cl.⁵: **G05D 1/08**, G05D 1/02

(21) Numéro de dépôt: **88401530.6**

(22) Date de dépôt: **20.06.88**

(54) **Système pour la commande d'un aéronef en roulis et en lacet.**

(30) Priorité: **24.06.87 FR 8708870**

(43) Date de publication de la demande:
**28.12.88 Bulletin 88/52**

(45) Mention de la délivrance du brevet:
**30.12.92 Bulletin 92/53**

(84) Etats contractants désignés:
**DE ES GB IT NL SE**

(56) Documents cités:
**EP-A- 0 046 875**
**FR-A- 1 018 086**
**US-A- 3 512 737**

**SCIENTIFIC HONEYWELLER, vol. 7, no. 1, 1986, pages 8-14, Mineapolis, Minesota, US; L. MUELLER: "Flight control at Honeywell"**

**IEEE 1980 NATIONAL AEROSPACE AND ELECTRONICS CONFERENCE NAECON 1980, Dayton Convention Center, 20-22 mai 1980, vol. 1, pages 159-165, IEEE; R.L. KISSLINGER et al.: "Design and development of the control laws for the F-18 primary flight control system"**

(73) Titulaire: **AEROSPATIALE SOCIETE NATIONA-LE INDUSTRIELLE Société Anonyme dite:**
**37, Boulevard de Montmorency**
**F-75016 Paris(FR)**

(72) Inventeur: **Farineau. Jacques**
**Appartement 65 45 rue St. Roch**
**F-31400 Toulouse(FR)**

(74) Mandataire: **Bonnetat, Christian et al**
**CABINET BONNETAT 23, Rue de Léningrad**
**F-75008 Paris(FR)**

## Description

La présente invention concerne un système pour la commande d'un aéronef en roulis et en lacet, mettant en oeuvre des commandes électriques de vol.

On sait que la commande en roulis d'un aéronef résulte de l'actionnement des ailerons et, éventuellement, des volets déporteurs, à l'aide d'un manche, tandis que la commande en lacet est obtenue par braquage de la gouverne de direction à l'aide d'un palonnier.

On sait également que :

a) un braquage des surfaces de gauchissement (ailerons et volets déporteurs) non seulement incline latéralement l'aéronef (commande en roulis), mais encore provoque un dérapage latéral de cet aéronef, qui dégrade les performances de ce dernier. Pour éviter un tel dérapage, on doit agir simultanément de façon adéquate sur le braquage de la gouverne de direction ;

b) un braquage de la gouverne de direction non seulement commande l'aéronef en lacet, mais de plus provoque, d'une part, un dérapage latéral dudit aéronef et, d'autre part, une augmentation de l'assiette latérale (roulis) de celui-ci. Une telle augmentation de l'assiette latérale peut rapidement faire passer l'aéronef sur le dos, de sorte que, pour conserver l'assiette latérale à une valeur raisonnable et pour contrer le dérapage induit par le braquage de la gouverne de direction, il est nécessaire de braquer de façon appropriée les surfaces de gauchissement ;

c) quand un aéronef est incliné latéralement, alors que ni ses surfaces de gauchissement, ni sa gouverne de direction ne sont braquées, il n'est pas neutre en roulis, c'est-à-dire qu'il ne conserve pas une assiette latérale constante, mais au contraire son assiette latérale dérive soit vers l'intérieur du virage (aéronef divergent en roulis), soit vers l'extérieur du virage (aéronef convergent en roulis);

d) quand des perturbations latérales ou une dissymétrie de propulsion (panne de moteur) se produisent, l'aéronef prend des assiettes latérales importantes, qui doivent être corrigées par actionnement des surfaces de gauchissement et de la gouverne de direction.

Ce qui précède montre, d'une part, que les commandes en roulis et en lacet sont étroitement interdépendantes et, d'autre part, qu'avec des commandes de vol mécaniques le pilote doit fréquemment intervenir sur les commandes en roulis et en lacet.

Par ailleurs, on connaît des commandes de vol électriques permettant d'utiliser au mieux un ou plusieurs calculateurs de vol et présentant, par rapport aux commandes de vol mécaniques, des gains de masse importants.

La présente invention a pour objet un système de commande d'un aéronef en roulis et en lacet spécialement conçu pour des commandes de vol électriques et destiné à alléger considérablement la charge de travail du pilote dans ce domaine.

A cette fin, selon l'invention, le système pour la commande en roulis et en lacet d'un aéronef comportant des surfaces de gauchissement actionnées à partir d'un premier organe d'actionnement volontaire (manche) et une gouverne de direction actionnée à partir d'un second organe d'actionnement volontaire (palonnier) par l'intermédiaire d'une transmission mécanique, lesdits premier et second organes d'actionnement volontaire étant associés à des transducteurs délivrant respectivement des signaux électriques dépendant de la position desdits organes, ledit aéronef comportant de plus des moyens susceptibles de délivrer des signaux électriques respectivement représentatifs de la vitesse de roulis, de l'assiette, de la vitesse de lacet et du dérapage latéral dudit aéronef, est remarquable en ce qu'il comporte :

- un dispositif susceptible d'élaborer -à partir desdits signaux électriques respectivement représentatifs de la position dudit premier organe d'actionnement volontaire, de la vitesse de roulis, de l'assiette, de la vitesse de lacet, du dérapage latéral et de la position dudit second organe d'actionnement volontaireun ordre électrique unique de commande en roulis formé par une combinaison linéaire desdits signaux électriques ;
- un dispositif de répartition qui, à partir dudit ordre électrique de commande en roulis unique, commande chacune desdites surfaces de gauchissement par l'intermédiaire de moyens d'actionnement ;
- un dispositif susceptible d'élaborer -à partir desdits signaux électriques respectivement représentatifs de la position dudit premier organe d'actionnement volontaire, de la vitesse de roulis, de l'assiette, de la vitesse de lacet, du dérapage latéral et de la position dudit second organe d'actionnement volontaire- un ordre électrique de commande en lacet formé par une combinaison linéaire desdits signaux électriques ; et
- un dispositif permettant de combiner ledit ordre électrique de commande en lacet et un ordre mécanique provenant directement dudit second organe d'actionnement volontaire par l'intermédiaire de ladite transmission mécanique, pour délivrer un ordre unique combiné de commande en lacet, qui

commande ladite gouverne de direction, par l'intermédiaire de moyens d'actionnement.

On voit ainsi que, dans le système pour la commande en roulis et en lacet d'un aéronef conforme à l'invention, les paramètres de commande en lacet sont pris en compte pour l'élaboration de l'ordre unique de commande en roulis et que, inversement, les paramètres de commande en roulis sont intégrés dans l'ordre électrique de commande en lacet. Par suite :

- lorsque l'aéronef est sollicité en roulis par l'actionnement des surfaces de gauchissement, le dérapage qui en résulte peut être contré directement par le système de l'invention qui braque la gouverne de direction de façon appropriée, de sorte que le pilote n'a plus à intervenir pour actionner le palonnier ;

- lorsque l'aéronef est sollicité en lacet par l'actionnement de la gouverne de direction, le dérapage et l'assiette induits qui en résultent peuvent être contrés directement par le système de l'invention qui braque les surfaces de gauchissement de façon appropriée, de sorte que le pilote n'a plus à intervenir pour actionner le manche ;

- lorsque des perturbations latérales ou une panne de moteur se produisent, les variations correspondantes d'assiette latérale par rapport à l'ordre donné par le pilote à l'aide du manche peuvent entraîner la génération, respectivement par ledit dispositif d'élaboration d'ordre électrique unique de commande en roulis et par ledit dispositif d'élaboration d'ordre électrique de commande en lacet, d'ordres de commande agissant sur les surfaces de gauchissement et sur la gouverne de direction pour que ces variations soient aussi faibles que possible.

Ainsi, grâce à l'invention, la charge de travail du pilote est considérablement limitée du fait que, lorsque le manche est lâché, l'aéronef reste toujours dans des configurations de vol saines même lorsque surviennent des perturbations et que, pour une manoeuvre donnée, le pilote n'a plus à contrer les efforts secondaires dûs à cette manoeuvre.

On remarquera de plus que, dans le cas où des pannes interviendraient dans le système rendant impossible la génération des ordres électriques de commande en lacet et de commande en roulis, l'aéronef resterait pilotable en lacet et en roulis, en dernier secours, par l'actionnement du palonnier qui, par l'intermédiaire de ladite transmission mécanique et dudit dispositif délivrant l'ordre unique combiné de commande en lacet, agirait sur la gouverne de direction.

Dans un mode avantageux de réalisation, le dispositif d'élaboration de l'ordre électrique unique de commande en roulis comporte une pluralité d'amplificateurs dont les entrées reçoivent respectivement lesdits signaux électriques respectifs de la position dudit premier organe d'actionnement volontaire, de la vitesse de roulis, de l'assiette, de la vitesse de lacet, du dérapage latéral et de la position dudit second organe d'actionnement volontaire, et dont les sorties sont reliées en commun à un sommateur délivrant ledit ordre électrique unique de commande en roulis. De même, il est avantageux que le dispositif d'élaboration de l'ordre électrique de commande en lacet comporte une pluralité d'amplificateurs dont les entrées reçoivent respectivement lesdits signaux électriques représentatifs de la position dudit premier organe d'actionnement volontaire, de la vitesse de roulis, de l'assiette, de la vitesse de lacet, du dérapage latéral et de la position dudit second organe d'actionnement volontaire, et dont les sorties sont reliées en commun à un sommateur délivrant ledit ordre électrique de commande en lacet.

De préférence, chacun desdits amplificateurs du dispositif d'élaboration de l'ordre électrique unique de commande en roulis et du dispositif d'élaboration de l'ordre électrique de commande en lacet est du type dans lequel le gain peut être choisi entre plusieurs valeurs différentes. Ainsi, en fonction de la configuration de vol et de la vitesse de l'aéronef, il est possible de donner à chacun desdits amplificateurs le gain (de signe positif ou de signe négatif) le plus approprié et donc de donner au signal qu'il amplifie l'importance optimale dans la combinaison linéaire des signaux électriques. Les types de configurations différents peuvent correspondre respectivement, par exemple, à l'atterrissage, au décollage, au vol avec voilure lisse, etc... et, pour chaque configuration, on peut prévoir plusieurs valeurs de gain en fonction de la vitesse de l'aéronef. Chaque configuration résulte d'un ordre du pilote et est assurée par un ordinateur de configuration. Par suite, le gain desdits amplificateurs peut être commandé par ledit ordinateur de configuration en liaison avec les moyens de mesure de la vitesse de l'aéronef.

Ledit dispositif de répartition de l'ordre électrique unique de commande en roulis peut être une table qui, à toute valeur dudit ordre électrique unique, fait correspondre une valeur de braquage de chacune desdites surfaces de gauchissement. Ainsi, cette table comporte en mémoire une pluralité de répartitions possibles. En fonction de l'amplitude dudit ordre électrique unique et de la configuration actuelle de l'aéronef, la table délivre la répartition optimale qu'elle a en mémoire. Bien entendu, pour une répartition donnée, la valeur de braquage de certaines desdites surfaces de gauchissement peut éventuellement être nulle.

Par ailleurs, ledit dispositif délivrant un ordre unique combiné de commande en lacet peut être constitué par un ensemble de leviers formant un parallélogramme déformable dont une articulation est fixe, ledit ordre électrique et ledit ordre mécanique de commande en lacet étant respectivement appliqués aux deux côtés dudit parallélogramme articulés autour de ladite articulation fixe, tandis que l'ordre unique combiné de commande en lacet est prélevé sur l'un des autres côtés dudit parallélogramme.

Le dispositif d'élaboration de l'ordre électrique unique de commande en roulis et le dispositif d'élaboration de l'ordre électrique de commande en lacet peuvent recevoir de la centrale inertielle de bord, encore appelée système de références inertielles, les signaux respectivement représentatifs de la vitesse de roulis, de l'assiette et de la vitesse de lacet. En revanche, à bord des aéronefs, le dérapage latéral n'est généralement pas mesuré. Aussi, selon une autre particularité de la présente invention, le système pour la commande en roulis et en lacet comporte des moyens pour engendrer ledit signal électrique représentatif du dérapage latéral à partir, d'une part, des signaux électriques de vitesse de roulis et de vitesse de lacet et d'un signal d'accélération latérale, données par ladite centrale inertielle, et, d'autre part, d'informations de braquage de la gouverne de direction et des surfaces de gauchissement. Ces dernières informations de braquage de la gouverne de direction et des surfaces de gauchissement peuvent provenir de capteurs ou bien être respectivement constituées par les signaux électriques délivrés par ledit dispositif d'élaboration de l'ordre électrique de commande en lacet et par ledit dispositif de répartition de l'ordre électrique unique de commande en roulis.

De préférence, le système selon l'invention comporte un transducteur, de type connu et usuellement utilisé sur les aéronefs modernes, transformant le basculement dudit premier organe d'actionnement volontaire en une vitesse de roulis demandée, ainsi qu'un dispositif intégrateur transformant ladite vitesse de roulis demandée en une valeur de consigne d'assiette. De plus, il est avantageux que ledit dispositif intégrateur comporte un intégrateur et un amplificateur d'avance de phase, dont les entrées ont un point commun recevant ladite vitesse de roulis demandée et dont les sorties sont réunies à un sommateur. Ainsi, l'aéronef est neutre en roulis. En effet, lorsque le pilote, après avoir obtenu par actionnement dudit premier organne d'actionnement volontaire une valeur désirée pour l'assiette de l'aéronef, relâche ledit premier organe d'actionnement volontaire, celui-ci, de façon connue, revient spontanément à sa position neutre correspondant à une vitesse de roulis demandée nulle. Par suite, en absence de perturbations extérieures, l'aéronef conserve la consigne d'assiette qu'il a atteinte au moment où le pilote a relâché ledit premier organe d'actionnement volontaire.

Pour éviter qu'en cas de saturation des surfaces de gauchissement, l'assiette réelle prise par l'aéronef puisse prendre du retard par rapport à l'assiette demandée par le pilote, il est avantageux qu'entre ledit point commun à l'intégrateur et à l'amplificateur, et l'entrée dudit intégrateur, soit disposé un commutateur commandé susceptible de relier l'entrée dudit intégrateur soit audit point commun, soit à un générateur émettant un signal comportant la vitesse de variation de l'assiette réelle, ledit commutateur étant commandé par la saturation des surfaces de gauchissement, lorsque l'ordre de manche est non nul. De préférence, afin d'introduire une avance de phase, ledit générateur émet un signal qui est une combinaison linéaire de la dérivée première et de la dérivée seconde de l'assiette latérale. Bien entendu, cette vitesse et cette accélération de la variation de l'assiette réelle sont données par la centrale inertielle de bord.

Il peut être avantageux que l'aéronef, au lieu d'être neutre en roulis pour toute valeur d'assiette comme cela est mentionné ci-dessus, soit stable en roulis lorsque l'assiette est supérieure, en valeur absolue, à un certain seuil, tout en restant neutre en roulis lorsque la valeur absolue de l'assiette est inférieure audit seuil. Ainsi, lorsque l'assiette est supérieure audit seuil et que le pilote relâche le manche, l'assiette reprend automatiquement une valeur égale audit seuil. De plus, il est également avantageux qu'au-delà dudit seuil, l'assiette latérale soit une fonction de la position du manche : on obtient ainsi une limitation de l'assiette.

A cette fin, selon une particularité importante de la présente invention, d'une part, on prévoit qu'au-delà dudit seuil le transducteur associé audit premier organe d'actionnement volontaire délivre une valeur d'assiette demandée et non plus une valeur de vitesse de roulis désirée, comme cela est le cas en deçà dudit seuil, et, d'autre part, on agence entre la sortie de ce transducteur et le dispositif intégrateur des premiers moyens susceptibles de soustraire du signal issu dudit transducteur un signal de correction qui est nul en deçà dudit seuil, mais qui est une fonction de la valeur d'assiette réellement atteinte par l'aéronef au-delà dudit seuil. Ainsi, au delà dudit seuil, le dispositif intégrateur intègre la différence, variable dans le temps, entre la valeur d'assiette demandée délivrée par ledit transducteur et la valeur réelle d'assiette de l'aéronef et délivre à sa sortie une consigne d'assiette demandée. De préférence, ledit signal de correction est proportionnel à $\phi - \phi s$, si l'assiette $\phi$ est positive et supérieure à la valeur positive $+ \phi s$ dudit seuil, et à $- \phi + \phi s$, si l'assiette $\phi$ est négative et inférieure à la valeur négative $- \phi s$ dudit seuil.

De même, il est important que la présente invention permette la protection de l'aéronef contre le flottement à vitesse élevée. Aussi, dans un mode de réalisation avantageux de l'invention, on prévoit que, au-delà d'un seuil de vitesse (vitesse maximale opérationnelle) de l'avion, le transducteur associé audit premier organe d'actionnement volontaire délivre une valeur d'assiette demandée, alors qu'en deçà dudit seuil de vitesse ce transducteur délivre une vitesse de roulis demandée et on dispose, entre la sortie dudit transducteur et le dispositif intégrateur, des seconds moyens susceptibles de soustraire du signal issu du transducteur un signal de correction qui est proportionnel à l'assiette réelle de l'aéronef. Ainsi, si la vitesse de l'avion devient supérieure au seuil de vitesse et si le pilote relâche le manche, l'avion reprend automatiquement une assiette nulle.

De préférence, lesdits premiers et seconds moyens de soustraction sont montés en parallèle et sont rendus alternativement actifs sous la dépendance de moyens comparant la vitesse de l'aéronef audit seuil de vitesse.

Selon une autre particularité importante de la présente invention, le système pour la commande en roulis et en lacet permet la correction automatique de la dissymétrie de poussée due à la panne d'un moteur, et donc le contrôle de la trajectoire de l'aéronef.

On sait que pour contrer une dissymétrie de poussée, on peut :
- soit braquer la gouverne de direction seule, ce qui entraîne un dérapage latéral de l'aéronef ;
- soit braquer la gouverne de direction et les surfaces de gauchissement, ce qui permet d'éviter le dérapage latéral.

Toutefois, ces méthodes ne sont pas équivalentes en ce qui concerne les performances et il est apparu qu'il était préférable d'obtenir la correction sans braquage des surfaces de gauchissement, c'est-à-dire de maintenir constant le cap de l'aéronef sans utilisation de ces surfaces de gauchissement.

Si l'on suppose, pour expliquer simplement le phénomène, que les surfaces de gauchissement et la gouverne de direction de l'avion présentent au moment de l'apparition de la panne d'un des moteurs de l'aéronef, un braquage nul, tous les signaux représentatifs adressés au système sont nuls à ce moment. Par suite, ils ne peuvent s'opposer à ce que l'avion parte en roulis. Dès que ce roulis de déséquilibre est amorcé, les signaux d'assiette et de vitesse de roulis vont intervenir sur les surfaces de gauchissement pour s'opposer à ce roulis, et l'avion va se stabiliser à des valeurs d'assiette, de vitesse de roulis, de dérapage, de signal de roulis et de signal de lacet, liées aux valeurs des gains des amplificateurs du système.

Ainsi, pour retrouver un cap constant, c'est-à-dire pour retrouver une vitesse de lacet nulle, on a le choix entre une action sur le manche ou une action sur le palonnier.

Selon l'invention, on prévoit un dispositif permettant de retrouver le cap constant en maintenant une amplitude des surfaces de gauchissement nulle.

A cette fin, le dispositif d'élaboration de l'ordre électrique unique de commande en roulis et le dispositif d'élaboration de l'ordre électrique de commande en lacet comportent chacun un amplificateur supplémentaire, dont la sortie est reliée au sommateur correspondant, les entrées desdits amplificateurs supplémentaires étant reliées en commun à un dispositif de correction de dissymétrie de poussée. De préférence, ce dispositif de correction de dissymétrie de poussée comporte un intégrateur, dont la sortie alimente lesdits amplificateurs supplémentaires et dont l'entrée peut être reliée, pour une première position d'un commutateur, à une tension nulle et, pour une seconde position dudit commutateur, à une tension constante de référence, ce commutateur étant commandé par un dispositif de commande, qui lui fait prendre ladite seconde position pour une condition de déclenchement représentative du fait que l'aéronef vole à cap constant, que le pilote a relâché le premier organe d'actionnement volontaire et que les surfaces de gauchissement sont trop braquées, ledit dispositif de commande ramenant ledit commutateur à sa première position, dès que ledit premier organe d'actionnement volontaire est sollicité par le pilote ou que le braquage des surfaces du gauchissement est proche de zéro.

Il est avantageux que ladite condition de déclenchement inclue de plus que l'aéronef est stabilisé en roulis et que l'effort exercé pour le second organe d'actionnement volontaire est nul.

Le signe de la tension de référence dépend du sens du braquage des surfaces de gauchissement.

Par ailleurs, comme pour les autres amplificateurs, les gains desdits amplificateurs supplémentaires desdits dispositifs d'élaboration des ordres électriques de commande en roulis et de commande en lacet sont commandables en fonction de la configuration de vol et de la vitesse dudit aéronef.

Les figures du dessin annexé feront bien comprendre comment l'invention peut être réalisée.

La figure 1 montre, en perspective du dessus, un avion civil gros porteur mettant en application le système de commande en roulis et en lacet selon l'invention.

La figure 2 représente le schéma synoptique du système de commande en roulis et en lacet, conforme à l'invention.

Les figures 3a, 3b et 3c illustrent la structure et le fonctionnement du dispositif destiné à combiner l'ordre électrique et l'ordre mécanique de commande en lacet.

La figure 4 illustre schématiquement le réglage du dispositif de répartition du signal unique de roulis et des gains des amplificateurs des dispositifs d'élaboration des signaux électriques de commande en roulis et en lacet, en fonction de la configuration et de la vitesse dudit avion.

Les figures 5 à 7 montrent trois variantes de réalisation du générateur de valeurs de consigne pour l'assiette latérale de l'avion.

La figure 8 est un diagramme illustrant le fonctionnement du générateur de la figure 7.

La figure 9 illustre une quatrième variante de réalisation du générateur de valeurs de consigne pour l'assiette latérale de l'avion.

La figure 10 montre le schéma synoptique du dispositif permettant de garder un cap constant en cas de dissymétrie de poussée.

Sur ces figures, des références identiques désignent des éléments semblables.

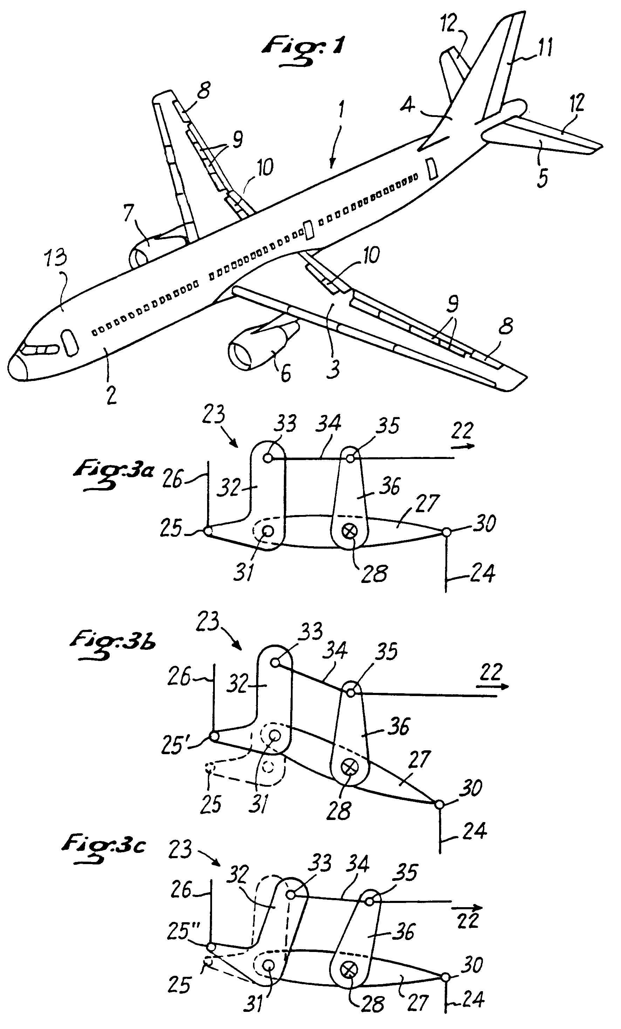

L'avion civil gros porteur 1, montré en perspective sur la figure 1, comporte un fuselage 2, des ailes 3, un empennage vertical 4 et un empennage horizontal 5. Il est propulsé par deux moteurs 6 et 7, accrochés sous les ailes 3.

Sur l'extrados des ailes 3 sont prévus des ailerons 8 de bord de fuite, des volets déporteurs 9, encore appelés spoilers, et des aérofreins 10. Sur l'empennage vertical 4 est prévue une gouverne de direction 11, tandis que des gouvernes de profondeur 12 sont articulées sur le bord de fuite de l'empennage horizontal 5.

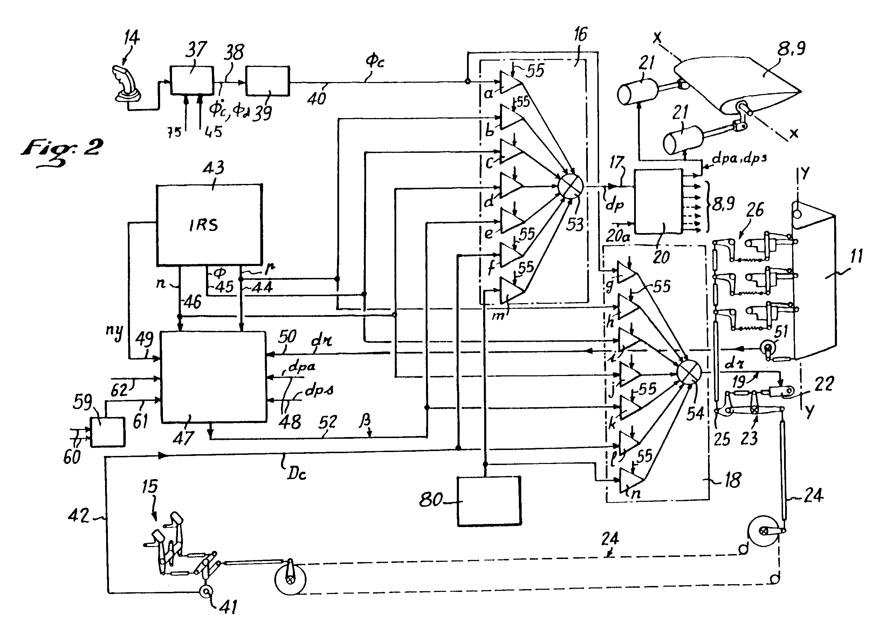

De façon connue, la commande en roulis de l'avion 1 peut être obtenue grâce à l'actionnement des ailerons 8 et/ou des volets déporteurs 9, tandis que la commande en lacet dudit avion est réalisée au moyen de la gouverne de direction 11. A cette fin, dans le poste de pilotage 13 dudit avion 1, sont prévus au moins un manche 14 et au moins un palonnier 15, à la disposition d'un pilote (voir la figure 2). Le manche 14 commande les ailerons 8 et les volets déporteurs 9 en rotation autour de leur axe de rotation X-X, alors que le palonnier 15 commande la gouverne de direction 11 en rotation autour de son axe de rotation Y-Y. A des fins de simplification, une seule surface de gauchissement, pouvant être un aileron 8 ou un volet déporteur 9, est représentée sur la figure 2.

La présente invention ne concerne que la commande des ailerons 8, des volets déporteurs 9 et de la gouverne de direction 11, de sorte que les commandes des aérofreins 10, des gouvernes de profondeurs 12 et éventuellement de l'empennage horizontal 5 ne seront pas décrites.

Comme le montre la figure 2, le système de commande selon l'invention comporte un dispositif 16 pour l'élaboration d'un ordre électrique unique de commande de roulis apparaissant à la sortie 17 dudit dispositif 16 et un dispositif 18 pour l'élaboration d'un ordre électrique de commande de lacet apparaissant à la sortie 19 dudit dispositif 18.

L'ordre unique de roulis disponible à la sortie 17 du dispositif 16 est appliqué à un dispositif de répartition 20 qui commande les organes d'actionnement 21 (par exemple des vérins) de chaque aileron 8 et/ou de chaque volet déporteur 9 pour que l'avion 1 prenne l'assiette latérale désirée. Le dispositif de répartition 20 est programmé de façon que, en fonction de la valeur du signal de roulis présent à la sortie 17 et en fonction des informations concernant la vitesse de l'avion et la phase de vol en cours (vol de croisière, décollage, atterrissage, etc...) qu'il reçoit à son entrée 20a, ladite assiette latérale désirée soit obtenue soit par commande des seuls ailerons 8, soit par celle des seuls volets déporteurs 9, ou bien encore par une commande combinée desdits ailerons 8 et desdits volets déporteurs 9.

L'ordre électrique de lacet disponible à la sortie 19 du dispositif 18 est appliqué à des moyens d'actionnement 22 (par exemple des vérins) de la gouverne de direction 11, qui eux-mêmes agissent sur un dispositif 23 de combinaison d'ordre de lacet. Ce dispositif 23 de combinaison d'ordre de lacet est par ailleurs relié au palonnier 15, par l'intermédiaire d'une transmission mécanique 24. Ainsi, le dispositif 23 est susceptible de recevoir un ordre de commande par les moyens d'actionnement 22 et/ou un ordre de commande directement par le palonnier 15. Il élabore à sa sortie 25, comme cela est expliqué ci-après, un ordre résultant de commande en lacet qui commande la gouverne de direction 11, par l'intermédiaire d'une liaison mécanique 26.

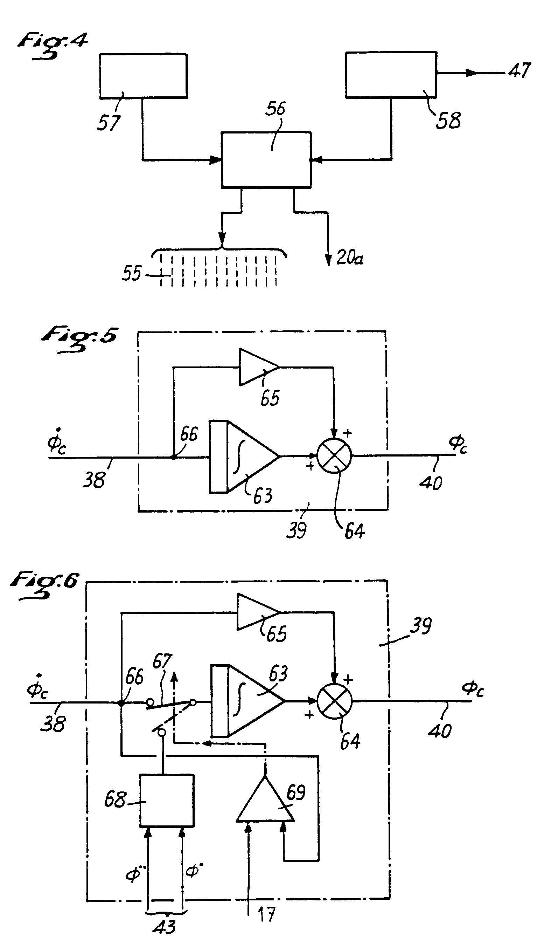

Comme on peut le voir schématiquement sur les figures 3a, 3b et 3c, le dispositif 23 de combinaison d'ordre de lacet comporte un levier 27 articulé dans sa partie médiane autour d'un axe fixe 28 solidaire de la structure de l'avion 1 et articulé à l'une de ses extrémités en 30, à la transmission mécanique 24, reliée au palonnier 15. A son extrémité opposée, le levier 27 est articulé, en 31, au sommet d'une équerre 32 dont une branche constitue la sortie 25, articulée à la liaison mécanique 26. L'autre branche de l'équerre 32 est articulée, en 33, à son extrémité opposée à l'articulation 31, à une bielle 34. L'autre extrémité de la bielle 34 est articulée, en 35, à une extrémité d'un levier 36, dont l'autre extrémité est articulée autour de l'axe fixe 28. L'articulation 35 est reliée aux moyens d'actionnement 22. Les articulations et axe 28, 31, 33 et 35 déterminent un parallélogramme déformable.

Sur la figure 3a, on a représenté le dispositif 23 au repos, c'est-à-dire en position neutre, lorsqu'aucun ordre de braquage n'est adressé à la gouverne de direction 11, ni par le dispositif 18, ni par le palonnier 15.

6

Si le palonnier est actionné par le pilote, alors qu'aucun ordre n'est adressé par le dispositif 18 (voir la figure 3b), le levier 27 pivote autour de l'axe 28 et la sortie 25 passe à la position 25'. Par suite, la gouverne de direction 11 est commandée en rotation autour de son axe Y-Y. Inversement, si les moyens d'actionnement 22 reçoivent un ordre du dispositif 18, alors que le palonnier 15 est en position neutre (voir la figure 3c), le levier 27 reste dans la position de la figure 3a, mais l'équerre 32 pivote autour de l'articulation 31. La sortie 25 du dispositif 23 passe alors à la position 25''. On voit aisément que si le dispositif 23 reçoit simultanément un ordre du palonnier 15 et un ordre du dispositif 18, il combine les deux ordres pour commander la gouverne de direction 11.

Le manche 14 est relié à un transducteur 37, délivrant à sa sortie 38, un signal électrique dépendant du basculement dudit manche 14 et représentatif d'une vitesse de roulis demandée $\dot\phi$c. Ce signal $\dot\phi$c est appliqué à un dispositif 39, du type intégrateur, délivrant donc à sa sortie 40 une valeur d'assiette latérale commandée ou valeur de consigne $\phi$c.

Par ailleurs, le palonnier 15 est relié à un transducteur 41, délivrant à sa sortie 42, un signal électrique dépendant de sa position et représentatif d'une direction commandée Dc.

Dans l'avion 1, est prévu un système de références inertielles 43, généralement désigné par I R S, susceptible de délivrer, respectivement sur des sorties 44, 45 et 46, la vitesse de roulis p (encore appelée taux de roulis), l'assiette latérale réelle $\phi$ et la vitesse de lacet r (encore appelée taux de lacet). Ces informations de vitesse de roulis p et de vitesse de lacet r provenant du système de références inertielles 43 sont adressées à un calculateur 47. Le calculateur 47 reçoit de plus, sur des entrées 48, les valeurs dpa et dps du braquage des ailerons 8 et des volets déporteurs 9 soit directement du dispositif de répartition 20, soit de capteurs (non représentés) montés sur ceux-ci et, sur une entrée 49, l'accélération latérale ny dudit avion 1 délivrée par le système I R S 43. Enfin, sur une entrée 50, le calculateur 47 reçoit, soit d'un capteur 51 relié à la gouverne de direction 11, soit de la sortie 19 du dispositif 18, la valeur dr du braquage de celle-ci. A partir des données r, p, dpa, dps, ny et dr, le calculateur 47 calcule, comme on le verra ci-après, une valeur estimée $\beta$ pour le dérapage latéral de l'avion 1, qu'il délivre sur sa sortie 52.

Le dispositif 16 d'élaboration du signal unique de roulis comporte six amplificateurs, portant respectivement les références a à f et dont les gains respectifs seront indiqués ci-après par Ka à Kf.

Les entrées des amplificateurs a à f sont respectivement reliées à la sortie 40 du dispositif intégrateur 39, aux sorties 44, 45 et 46 du système 43, à la sortie 52 du calculateur 47 et à la sortie 42 du transducteur 41. Les sorties de ces amplificateurs sont reliées à un additionneur 53, dont la sortie forme la sortie 17 du dispositif 16. Par suite, à la sortie 17 apparaît un ordre de roulis (ou de gauchissement) dp, tel que

(1)    $dp = Ka.\phi c + Kb.p + Kc.\phi + Kd.r + Ke.\beta + Kf.Dc$

De même, le dispositif 18 d'élaboration du signal électrique de lacet comporte six amplificateurs, portant respectivement les références g à l et dont les gains respectifs seront désignés par Kg à Kf.

Les entrées des amplificateurs g à l sont respectivement reliées à la sortie 40 du dispositif intégrateur 39, aux sorties 44, 45 et 46 du système 43, à la sortie 52 du calculateur 47 et à la sortie 42 du transducteur 41. Les sorties de ces amplificateurs sont reliées à un additionneur 54, dont la sortie forme la sortie 19 du dispositif 18. Par suite, à la sortie 19 apparaît un ordre de direction (ou de lacet) dr, tel que

(2)    $dr = Kg.\phi c + Kh.p + Ki.\phi + Kj.r + Kk.\beta + Kl.Dc$

Chaque amplificateur a à l est du type à gain variable et comporte une entrée 55 de commande de gain.

Comme on peut le voir sur la figure 4, les entrées 55 desdits amplificateurs, ainsi que l'entrée 20a du dispositif de répartition 20 reçoivent des ordres d'un dispositif de commande 56, qui lui-même reçoit des informations d'un ordinateur de configuration 57 et de moyens 58 de la mesure de la vitesse de l'avion 1. Ainsi, les valeurs des gains Ka à Kl des amplificateurs a à l et celles des braquages dpa et dps des ailerons 8 et des volets déporteurs 9 peuvent être ajustées au mieux en fonction de la configuration de vol et de la vitesse de l'aéronef.

Comme on l'a dit ci-dessus, à chaque instant, la valeur du dérapage latéral $\beta$ est calculé par le calculateur 47. Pour ce faire, celui-ci peut mettre en oeuvre la relation (3) ci-dessous liant l'accélération latérale ny (encore appelée "facteur de charge latérale") et les forces aérodynamiques latérales. En effet, on peut écrire :

(3)    $ny = -\frac{V}{g} (Cyp.p + Cyr.r + Cy\beta.\beta + Cydr.dr + Cypa.dpa + Cyps.dps)$

expression dans laquelle, ny, p, r, $\beta$, dr, dpa et dps ayant la signification mentionnée ci-dessus, les autres paramètres représentent respectivement :

V : vitesse linéaire de l'avion ;

g : accélération de la pesanteur :

Cyp : coefficient aérodynamique, tel que Cyp.p représente la contribution de la vitesse de roulis p à la somme des forces latérales appliquées à l'avion 1 ;

Cyr : coefficient aérodynamique, tel que Cyr.r représente la contribution de la vitesse de lacet r à la somme des forces latérales appliquées à l'avion 1 ;

Cy $\beta$ : coefficient aérodynamique, tel que Cy$\beta$.$\beta$ représente la contribution du dérapage latéral $\beta$ à la somme des forces latérales appliquées à l'avion 1 :

Cydr : coefficient aérodynamique, tel que Cydr.dr représente la contribution du braquage de la gouverne de direction 11 à la somme des forces latérales appliquées à l'avion 1 ;

Cypa : coefficient aérodynamique, tel que Cypa.dpa représente la contribution du braquage des ailerons 8 à la somme des forces latérales appliquées à l'avion 1 ; et

Cyps : coefficient aérodynamique, tel que Cyps.dps représente la contribution du braquage des volets déporteurs 9 à la somme des forces latérales appliquées à l'avion 1.

Les différents coefficients aérodynamiques ci-dessus dépendent de la pression dynamique et de la masse de l'avion 1. De plus, ils varient avec l'incidence de celui-ci. Ils sont par exemple emmagasinés sous forme de tables dans une mémoire 59, qui reçoit l'incidence et la pression dynamique sur des entrées 60. Cette incidence et cette pression dynamique proviennent par exemple de sondes non représentées. Ainsi, à sa sortie 61, la mémoire 59 peut délivrer les valeurs actuelles desdits coefficients aérodynamiques, qui sont transmises au calculateur 47. De plus, par une liaison 62, le calculateur 47 reçoit la vitesse $\underline{V}$ de l'avion 1, délivrée par les moyens de mesure 58.

Ainsi, connaissant par ailleurs $\underline{g}$, le calculateur 47 peut calculer la valeur du dérapage latéral $\beta$, par l'expression

$$(4) \quad \beta = - \frac{1}{Cy\beta} ( \frac{g}{V} \, ny + Cyp.p + Cyr.r + Cydr.dr + Cypa.dpa + Cyps.dps )$$

directement dérivée de la relation (3).

Dans le système de la figure 2, on choisit :

- le gain Kf de l'amplificateur f du dispositif 16, c'est-à-dire l'importance de l'action du palonnier 15 sur le gauchissement, de façon $\underline{à}$ contrer le roulis induit par la gouverne de direction 11 et donc de façon à garder une assiette latérale $\phi$ faible lors d'une mise en dérapage sans aucune action sur le manche 14 ;
- le gain Kl de l'amplificateur 1 du dispositif 18, c'est-à-dire l'importance de l'action du palonnier 15 sur la gouverne de direction 11, $\underline{}$ de façon qu'à la course totale du palonnier 15 corresponde le braquage maximal de ladite gouverne ;
- les gains Kg, Kh, Ki et Kj des amplificateurs g, h, i et j du dispositif 18, c'est-à-dire l'importance de la consigne d'assiette $\phi$c et l'importance des paramètres de réaction p, $\phi$ et r sur la direction, de façon à annuler en permanence le dérapage induit par une commande de la gouverne de direction 11 à l'aide du palonnier 15 ;
- les gains Kb, Kc, Kd, Ke des amplificateurs b, c, d et e du dispositif 16 et les gains Kh, Ki, Kj, Kk des amplificateurs h, i, j et k du dispositif 18, c'est-à-dire l'importance de l'action des paramètres de réaction p, $\phi$, r et du dérapage $\beta$ sur le roulis et le lacet, de façon à bien amortir le roulis hollandais et à ce qu'il en résulte des constantes de temps bien déterminées compatibles avec la maniabilité de l'avion 1.

On remarquera de plus que le gain Ka de l'amplificateur $\underline{a}$ du dispositif 16 non seulement détermine l'importance de la consigne $\phi$c sur le gauchissement, mais encore permet de régler le gain statique du paramètre de réaction $\phi$.

Sur la figure 5, on a représenté un premier mode de réalisation du dispositif intégrateur 39 délivrant la valeur d'assiette latérale commandée $\phi$c. Dans ce mode de réalisation, entre l'entrée 38, sur laquelle apparaît une valeur de vitesse de roulis $\dot{\phi}$c demandée par l'actionnement du manche 14, et la sortie 40, sur laquelle est disponible une valeur d'assiette latérale commandée $\phi$c, on dispose un intégrateur 63 et un sommateur 64. De plus, en parallèle sur ledit intégrateur 63, on monte un amplificateur 65, dont l'entrée a un point commun 66 avec celle dudit intégrateur 63 et est donc reliée à l'entrée 38 et dont la sortie est reliée au sommateur 64. Ainsi, à la sortie 40 apparaît la somme des signaux délivrés par l'intégrateur 63 et par l'amplificateur 65, celui-ci apportant un gain d'avance de phase. Comme cela a été expliqué ci-dessus, le dispositif intégrateur 39 illustré par la figure 5 permet l'obtention d'un avion neutre en roulis.

Toutefois, un tel mode de réalisation peut se révéler insuffisant, si certaines surfaces de gauchissement 8, 9 deviennent défaillantes. Dans ce cas, en effet, la consigne $\dot{\phi}c$ demandée par le pilote par l'intermédiaire du manche 14 peut, notamment à basse vitesse, excéder les possibilités de l'avion 1. Les commandes de vol saturent alors les surfaces de gauchissement, mais sans parvenir à l'égalité de $\dot{\phi}$ avec $\dot{\phi}c$. La consigne $\phi c$ va donc varier plus rapidement que l'assiette réelle $\phi$ et, si cette situation se prolonge quelques instants, la différence $\phi c - \phi$ peut devenir très importante. Aussi, lorsque le pilote estime qu'il a atteint une valeur d'assiette satisfaisante et de ce fait relâche le manche 14, cette différence $\phi c - \phi$ a pour effet que l'avion 1, au lieu de rester à une assiette voisine de celle atteinte au relâché du manche 14, (comme cela a été expliqué ci-dessus) tend à poursuivre l'obtention d'une valeur $\phi c$ très différente. Il peut en résulter des perturbations importantes de pilotage.

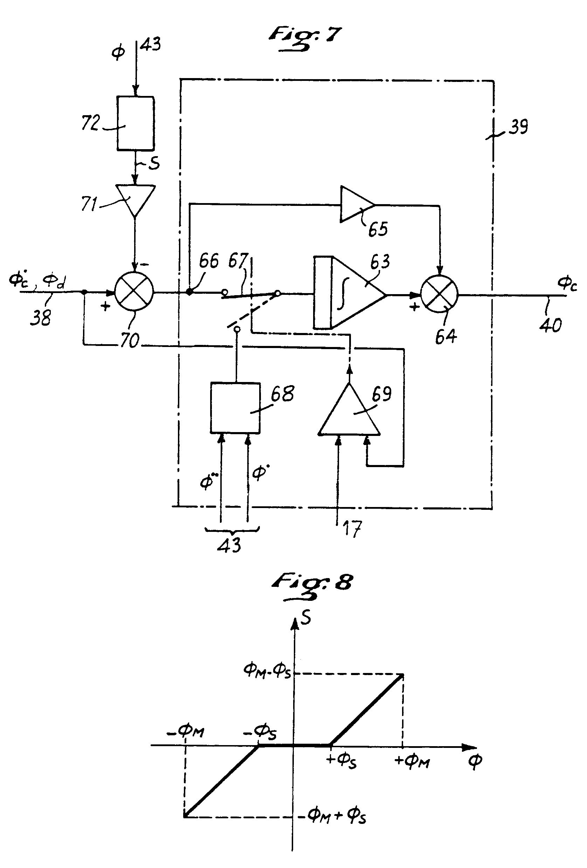

Le mode de réalisation de la figure 6 tend à remédier à cet inconvénient. Dans ce mode de réalisation, on dispose, entre l'entrée de l'intégrateur 63 et le point commun 66, un commutateur commandé 67 à deux positions. Pour la première de ces positions, le commutateur 67 relie le point 66 à l'entrée de l'intégrateur 63. Pour la seconde desdites positions, l'entrée de l'intégrateur 63 est reliée à un dispositif 68 qui reçoit, du système de références inertielles 43, la dérivée première $\dot{\phi}$ et la dérivée seconde $\ddot{\phi}$ de l'assiette réelle $\phi$ et qui délivre un signal de la forme $\dot{\phi} + k\ddot{\phi}$. Le commutateur 67 est commandé par un détecteur 69 qui détecte la saturation de dp (sortie 17) lors d'un braquage du manche non nul. Tant que le détecteur 69 ne détecte pas de saturation de dp ou de braquage du manche, le commutateur 67 reste dans sa première position et le fonctionnement du dispositif 39 de la figure 6 est identique à celui du dispositif 39 de la figure 5. En revanche, dès que le détecteur 69 détecte une saturation des surfaces de gauchissement, il fait basculer le commutateur 67 dans sa seconde position, de sorte que l'intégrateur 63 reçoit le signal $\dot{\phi} + k\ddot{\phi}$. La consigne en roulis ne varie plus alors à la vitesse $\dot{\phi}c$, mais à la vitesse maximale $\dot{\phi}$ que peut fournir l'avion 1 à ce moment, augmentée du terme $k\ddot{\phi}$ d'avance de phase.

De plus, il peut être avantageux que la neutralité de l'avion en roulis (mentionnée ci-dessus) ne soit effective que pour une assiette latérale $\phi$ inférieure à un seuil $\phi s$, par exemple de l'ordre de 30°, mais que, en revanche, ledit avion soit stable en roulis au-delà dudit seuil $\phi s$, ce qui signifie qu'alors, si on relâche le manche 14, l'assiette réelle $\phi$ revient à la valeur $\phi s$. Il peut être également avantageux que, au-delà du seuil $\phi s$, l'assiette latérale réelle $\phi$ soit une fonction de la position du manche 14. En effet, on obtient alors une limitation de cette assiette latérale réelle $\phi$, puisqu'au plein débattement du manche 14 correspond dans ce cas une assiette latérale qu'on ne peut excéder. Un mode de réalisation du dispositif intégrateur 39, susceptible de procurer de tels résultats, est montré par la figure 7.

Dans ce mode de réalisation de la figure 7, on retrouve l'agencement des éléments 63 à 69 de la figure 6. De plus, entre la sortie 38 du transducteur 37 et le point commun 66, on dispose un soustracteur 70, qui reçoit le signal $\dot{\phi}c$ de la sortie 38, et le signal de sortie d'un amplificateur 71. L'entrée de l'amplificateur 71 est reliée à la sortie d'un dispositif de comparaison 72, qui reçoit, du système IRS 43, la valeur de l'assiette latérale réelle $\phi$.

Le dispositif de comparaison 72 délivre à sa sortie un signal S, tel que

a) S = 0, si la valeur absolue de $\phi$ est inférieure à la valeur absolue du seuil $\phi s$ ;

b) S = $\phi - \phi s$, si $\phi$ est supérieur à + $\phi s$;

c) S = $- \phi + \phi s$, si $\phi$ est inférieur à - $\phi s$

La variation du signal S en fonction de $\phi$ est représentée sur la figure 8, sur laquelle on a désigné par $\phi M$, la valeur maximale que peut prendre $\phi$.

Par ailleurs, on prévoit que lorsque l'assiette réelle $\phi$ est inférieure à - $\phi s$ ou supérieure à + $\phi s$, le transducteur 37 ne délivre plus une consigne de vitesse de roulis $\dot{\phi}c$, mais une assiette désirée $\phi d$. Pour cela, le transducteur 37 reçoit la grandeur $\phi$ apparaissant à la sortie 45 du système de références inertielles 43.

Ainsi, lorsque l'assiette réelle $\phi$ est comprise entre - $\phi s$ et + $\phi s$, le fonctionnement du dispositif de la figure 7 est identique à celui de la figure 6.

En revanche, lorsque $\phi$ est supérieure à + $\phi s$ ou inférieur à - $\phi s$ et que le commutateur 67 est dans la position représentée en trait plein, l'intégrateur 63 reçoit la différence $\phi d - K.S$, si K est le gain de l'amplificateur 71. Cette différence varie en fonction du temps. Par suite, la consigne d'assiette $\phi c$ est alors le résultat de l'intégration de $\phi d - K.S$ par l'intégrateur 63.

En régime permanent, le signal à l'entrée de l'intégrateur 63 est nul de sorte que l'on a à ce moment :

$$\phi d - K.S = 0$$

Par suite, si :
- $\phi$ est supérieur à + $\phi$s, on a

$\phi$d - K.($\phi$ - $\phi$s) = 0
ou $\phi$ = $\phi$s + $\frac{\phi d}{K}$

- $\phi$ est inférieure à - $\phi$s on a

$\phi$d - K (- $\phi$ + $\phi$s) = 0
ou $\phi$ = $\phi$s - $\frac{\phi d}{K}$ .

Par suite, si le pilote relâche le manche 14, $\phi$d devient égale à 0 et l'avion reprend spontanément une assiette $\phi$ égale à $\phi$s.

On voit de plus que, si on appelle $\phi$dM la valeur maximale de l'assiette désirée $\phi$d délivrée par le transducteur 37 lorsque le débattement du manche 14 est maximal, la valeur maximale $\phi$M prise par l'assiette $\phi$ de l'avion 1 est égale, suivant le signe de $\phi$, soit à

$$\phi s \; + \; \frac{\phi dM}{K},$$

soit à

$$\phi s \; - \; \frac{\phi dM}{K}.$$

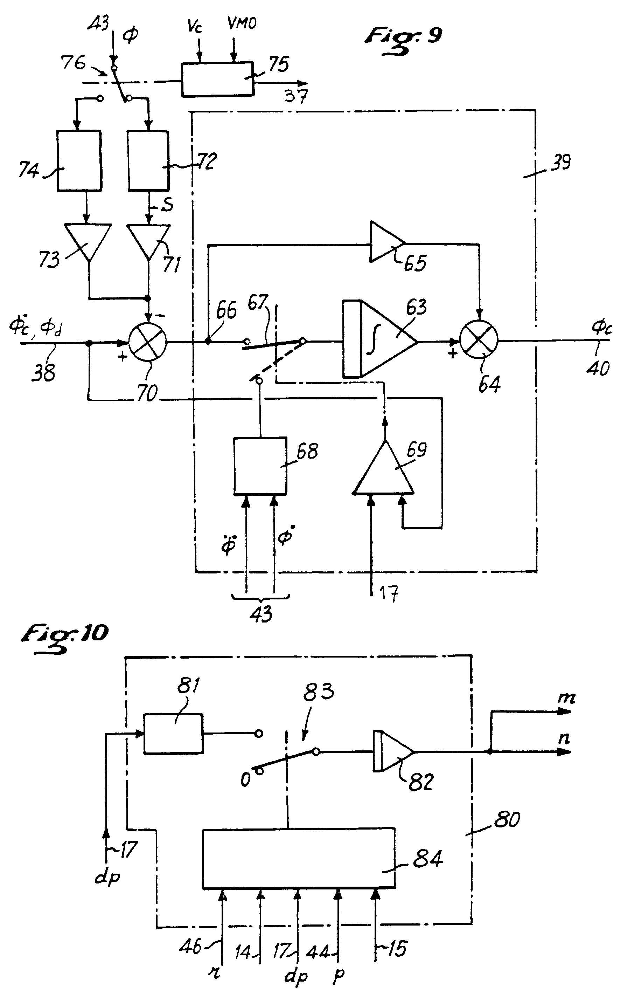

Sur la figure 9, on a représenté un dispositif semblable à celui de la figure 7, mais complété pour pouvoir prendre en compte, automatiquement, une limite de vitesse en deçà de laquelle on est sûr que l'avion 1 ne sera soumis à aucun flottement. Une telle limite de vitesse est généralement appelée "protection de vitesse".

Pour cela, en parallèle sur l'amplificateur 71 et sur le générateur de signal 72, on monte un amplificateur 73 et un dispositif à constante de temps 74. La sortie de l'amplificateur 73 est reliée à l'entrée de soustraction du soustracteur 70, tandis qu'un dispositif de commande 75 est prévu pour adresser l'assiette $\phi$ en provenance du système IRS 43, soit à l'entrée du générateur 72, soit à celle du dispositif à constante de temps 74. Pour cela, on prévoit un commutateur 76 commandé par le dispositif 75. Ce dernier reçoit la vitesse réelle Vc de l'avion 1 délivrée par le dispositif 58 et la compare à la valeur VMO de la vitesse maximale opérationnelle, déterminée par le constructeur de l'avion 1. Si Vc est inférieure à VMO, le commutateur 76 adresse l'information $\phi$ au générateur 72 (position représentée sur la figure 9) et, alors, le dispositif fonctionne de façon identique à celle décrite ci-dessus en regard de la figure 7. En revanche, si Vc est supérieure à VMO, le dispositif 7, d'une part, fait basculer le commutateur 76, de sorte que le dispositif à constante de temps 74 reçoit alors l'assiette $\phi$, et, d'autre part, commande le transducteur 37 pour que celui-ci délivre une valeur d'assiette demandée $\phi$d et non plus une valeur de vitesse de roulis $\dot{\phi}$c. Par suite, le signal à l'entrée de l'intégrateur 39 est alors égal, si K1 est le gain de l'amplificateur 73, à la différence $\phi$d - K1.$\phi$, variable dans le temps.

En régime permanent, on a $\phi$d - K1.$\phi$ = 0, de sorte que $\phi$ = $\frac{\phi d}{K}$ .

Par suite, après dépassement de la vitesse maximale opérationnelle, si le manche 14 est relâché (c'est-à-dire si $\phi$d = 0), l'assiette de l'avion l devient nulle, c'est-à-dire que l'avion est ramené automatiquement à une configuration à ailes plates. Le dispositif à constante de temps 74 a pour objet d'éviter toute brutalité dans ce rappel automatique à assiette nulle.

Par ailleurs, comme il a été mentionné ci-dessus, le système selon l'invention a pour objet, en cas de panne de moteur notamment, de corriger la dissymétrie de poussée afin de permettre à l'avion 1 de voler à cap constant (r = 0) sans braquage des surfaces de gauchissement (dp = 0).

Pour ce faire, on prévoit un dispositif de correction de dissymétrie de poussée 80 (voir les figures 2 et 10), qui adresse le même signal de sortie à deux amplificateurs m et n, respectivement, prévus dans le dispositif 16 et dans le dispositif 18. Comme pour les amplificateurs a à f̄, la sortie de l'amplificateur m est reliée au sommateur 53 et le gain Km dudit amplificateur m est commandable par une entrée 55 en fonction de la configuration de vol et de la vitesse de l'avion 1. De même, comme pour les amplificateurs g et l, la sortie de l'amplificateur n est reliée au sommateur 54 et le gain Kn dudit amplificateur n est commandable par une entrée 55 en fonction de la configuration de vol et de la vitesse de l'avion 1.

Comme on peut le voir sur la figure 10, le dispositif 80 comporte un générateur 81 de tension constante de référence, dont le signe, positif ou négatif, est commandé par le signe du signal dp apparaissant à la sortie 17 du dispositif 16, c'est-à-dire que le signe de cette tension de référence dépend du sens de braquage des surfaces de gauchissement (8, 9). Cette tension de référence, ou une tension nulle, peuvent être appliquées à l'entrée d'un intégrateur 82, par l'intermédiaire d'un commutateur 83. La sortie de l'intégrateur 82 est reliée aux amplificateurs m et n et le commutateur 83 est commandé par un dispositif de commande 84 qui reçoit les signaux représentatifs de la vitesse de roulis p, de la vitesse de lacet r, de l'ordre de commande en roulis dp, de la position du manche 14 et de la position du palonnier 15.

Lorsque le commutateur 83 est dans sa première position pour laquelle il relie la tension nulle à l'intégrateur 82, le dispositif 80 n'a aucun effet et le système de la figure 2 se comporte comme il a été décrit ci-dessus.

Le dispositif de commande 84 fait passer le commutateur 83 de cette première position à la seconde, pour laquelle le générateur 81 est relié à l'intégrateur 82, lorsque les conditions suivantes sont simultanément réunies :

- l'avion 1 vole à cap constant. Pour vérifier si cette condition est réalisée, le dispositif 84 examine le signal de vitesse en lacet r, éventuellement filtré pour en éliminer les perturbations, et si le signal r reste inférieur à un seuil donné pendant un temps déterminé (quelques secondes), il en déduit que le cap de l'avion 1 est constant.
- le manche 15 n'est pas sollicité ($\dot{\phi}c = 0$), c'est-à-dire que l'avion 1 n'est pas commandé en roulis. Le dispositif 84 vérifie que $\dot{\phi}c = 0$.
- le braquage des surfaces de gauchissement (8, 9) excède un seuil donné. Pour cela, le dispositif 84 examine le signal dp à la sortie 17, le filtre et vérifie si pendant une durée déterminée (quelques secondes) ce signal dp est supérieur ou non à un seuil déterminé.

A ces trois conditions simultanées, le dispositif 84 peut avantageusement ajouter les deux suivantes, pour affiner la commande :

- l'avion 1 est stabilisé en roulis. Le dispositif 84 vérifie si le signal p reste inférieur à un seuil donné pendant un temps déterminé (quelques secondes).
- l'effort au palonnier est nul. Le dispositif 84 examine si Dc = 0.

On voit que le dispositif 84 n'effectue que des opérations de comparaison de sorte qu'il peut être réalisé sous forme logique ou bien sous forme de logiciel. Dans les deux cas, il présente une structure bien connue, qui ne nécessite pas une description détaillée.

Quand le commutateur 83 est dans sa seconde position, par suite de la conjonction des conditions précédentes, l'intégrateur 82 intègre la tension constante de référence, de sorte qu'un signal en rampe apparaît aux entrées des amplificateurs m et n.

On fait donc varier, en fonction du temps, le signal délivré par les amplificateurs m et n, respectivement aux sommateurs 53 et 54, en balayant ainsi toutes les combinaisons possibles de voler à cap constant. Dès que l'on obtient dp = 0 à la sortie 17, le dispositif 84 fait repasser le commutateur 83 à sa première position. Il en est de même dès que le manche 14 est sollicité, c'est-à-dire dès que $\dot{\phi}c$ n'est plus nul.

**Revendications**

1. Système pour la commande en roulis et en lacet d'un aéronef (1) comportant des surfaces de gauchissement (8, 9) actionnées à partir d'un premier organe d'actionnement volontaire (14) et une gouverne de direction (11) actionnée à partir d'un second organe d'actionnement volontaire (15), par l'intermédiaire d'une transmission mécanique (24) lesdits premier et second organes d'actionnement volontaire (14, 15) étant associés à des transducteurs (37, 39 - 41) délivrant respectivement des signaux électriques dépendant de la position desdits organes, ledit aéronef comportant de plus des moyens (43, 47) susceptibles de délivrer des signaux électriques respectivement représentatifs de la vitesse de roulis, de l'assiette, de la vitesse de lacet et du dérapage latéral dudit aéronef, caractérisé en ce qu'il comporte :
   - un dispositif (16) susceptible d'élaborer -à partir desdits signaux électriques respectivement représentatifs de la position dudit premier organe d'actionnement volontaire, de la vitesse de roulis, de l'assiette, de la vitesse de lacet, du dérapage latéral et de la position dudit second organe d'actionnement volontaire- un ordre électrique unique de commande en roulis formé par une combinaison linéaire desdits signaux électriques ;

**EP 0 296 951 B1**

- un dispositif de répartition (20) qui, à partir dudit ordre électrique de commande en roulis unique, commande chacune desdites surfaces de gauchissement par l'intermédiaire de moyens d'actionnement (21) ;
- un dispositif (18) susceptible d'élaborer -à partir desdits signaux électriques respectivement représentatifs de la position dudit premier organe d'actionnement volontaire, de la vitesse de roulis, de l'assiette, de la vitesse de lacet, du dérapage latéral et de la position dudit second organe d'actionnement volontaire- un ordre électrique de commande en lacet formé par une combinaison linéaire desdits signaux électriques ; et
- un dispositif (23) permettant de combiner ledit ordre électrique de commande en lacet et un ordre mécanique provenant directement dudit second organe (15) d'actionnement volontaire par l'intermédiaire de ladite transmission mécanique (24), pour délivrer un ordre unique combiné de commande en lacet, qui commande ladite gouverne de direction (11), par l'intermédiaire de moyens d'actionnement (26).

2. Système selon la revendication 1,
   caractérisé en ce que le dispositif (16) d'élaboration de l'ordre électrique unique de commande en roulis comporte une pluralité d'amplificateurs (a à f) dont les entrées reçoivent respectivement lesdits signaux électriques représentatifs de la position dudit premier organe d'actionnement volontaire (14), de la vitesse de roulis, de l'assiette, de la vitesse de lacet, du dérapage latéral et de la position dudit second organe d'actionnement volontaire (15), et dont les sorties sont reliées en commun à un sommateur (53) délivrant ledit ordre électrique unique de commande en roulis.

3. Système selon la revendication 1,
   caractérisé en ce que le dispositif (18) d'élaboration de l'ordre électrique de commande en lacet comporte une pluralité d'amplificateurs (g à l) dont les entrées reçoivent respectivement lesdits signaux électriques représentatifs de la position dudit premier organe d'actionnement volontaire (14), de la vitesse de roulis, de l'assiette, de la vitesse de lacet, du dérapage latéral et de la position dudit second organe d'actionnement volontaire (15), et dont les sorties sont reliées en commun à un sommateur (54) délivrant ledit ordre électrique de commande en lacet.

4. Système selon l'une quelconque des revendications 2 ou 3,
   caractérisé en ce que chacun desdits amplificateurs (a à f ou g à l) dudit dispositif d'élaboration de l'ordre électrique unique de commande en roulis ou du dispositif d'élaboration de l'ordre électrique de commande en lacet est du type à gain réglable et en ce que le gain desdits amplificateurs est commandé en fonction de la configuration et de la vitesse de l'aéronef.

5. Système selon la revendication 1,
   caractérisé en ce que ledit dispositif (20) de répartition de l'ordre électrique unique de commande en roulis est une table, qui, à toute valeur dudit ordre électrique unique, fait correspondre une valeur de braquage de chacune desdites surfaces de gauchissement (8, 9).

6. Système selon la revendication 1,
   caractérisé en ce que ledit dispositif (23) délivrant un ordre unique combiné de commande en lacet est constitué par un ensemble de leviers formant un parallélogramme déformable dont une articulation (28) est fixe, ledit ordre électrique et ledit ordre mécanique de commande en lacet étant respectivement appliqués aux deux côtés (27, 36) dudit parallélogramme articulés autour de ladite articulation fixe, tandis que l'ordre unique combiné de commande en lacet est prélevé sur l'un (32) des autres côtés dudit parallélogramme.

7. Système selon la revendication 1,
   caractérisé en ce qu'il comporte des moyens (47) pour engendrer ledit signal électrique représentatif du dérapage latéral à partir, d'une part, des signaux électriques de vitesse de roulis et de vitesse de lacet et d'un signal d'accélération latérale dudit aéronef et, d'autre part d'informations de braquage de la gouverne de direction et des surfaces de gauchissement.

8. Système selon la revendication 1,
   caractérisé en ce qu'il comporte un transducteur (37) transformant le basculement dudit premier organe d'actionnement volontaire (14) en une vitesse de roulis demandée, ainsi qu'un dispositif intégrateur

12

(39) transformant ladite vitesse de roulis demandée en une valeur de consigne d'assiette.

9. Système selon la revendication 8,
caractérisé en ce que ledit dispositif intégrateur (39) comporte un intégrateur (63) et un amplificateur d'avance de phase (65) dont les entrées ont un point commun (66) reçoivent ladite vitesse de roulis demandée et dont les sorties sont réunies à un sommateur (64).

10. Système selon la revendication 9,
caractérisé en ce que, entre ledit point commun (66) et l'entrée dudit intégrateur (63), est disposé un commutateur commandé (57) susceptible de relier l'entrée dudit intégrateur (63) soit audit point commun (66), soit à un générateur (68) émettant un signal comportant la vitesse de variation de l'assiette réelle, ledit commutateur (67) étant commandé par la saturation des surfaces de gauchissement, lorsque l'ordre de manche est non nul.

11. Système selon la revendication 10,
caractérisé en ce que ledit générateur (68) émet un signal qui est une combinaison linéaire de la dérivée première et de la dérivée seconde de l'assiette latérale.

12. Système selon l'une quelconque des revendications 8 à 11,
caractérisé en ce que, au-delà d'un seuil d'assiette ($\phi$s), le transducteur (37) associé audit premier organe d'actionnement volontaire (14) délivre une valeur d'assiette demandée ($\phi$d), alors qu'en deçà dudit seuil ce transducteur (37) délivre une vitesse de roulis demandée et en ce que, entre la sortie dudit transducteur (37) et ledit dispositif intégrateur (39), sont prévus des premiers moyens (70, 71, 72) susceptibles de soustraire du signal issu dudit transducteur (37) un signal de correction (S) qui est nul en deçà dudit seuil ($\phi$s), mais qui est une fonction de la valeur d'assiette réellement atteinte par l'aéronef (1) au-delà dudit seuil.

13. Système selon la revendication 12,
caractérisé en ce que ledit signal de correction (s) est proportionnel à $\phi$ - $\phi$s, si l'assiette $\phi$ est positive et supérieure à la valeur positive + $\phi$s dudit seuil, et à - $\phi$ + $\phi$s, si l'assiette est négative et inférieure à la valeur négative - $\phi$s dudit seuil.

14. Système selon l'une quelconque des revendications 8 à 11,
caractérisé en ce que, au-delà d'un seuil de vitesse (VMO) de l'avion (1), le transducteur (37) associé audit premier organe d'actionnement volontaire (14) délivre une valeur d'assiette demandée ($\phi$d), alors qu'en deçà dudit seuil de vitesse ce transducteur (37) délivre une vitesse de roulis demandée et en ce que, entre la sortie dudit transducteur (37) et ledit dispositif intégrateur (39), sont prévus des seconds moyens (70, 73, 74), susceptibles de soustraire du signal issu dudit transducteur (37) un signal de correction qui est proportionnel à l'assiette réelle de l'aéronef.

15. Système selon les revendications 12 et 14,
caractérisé en ce que lesdits premiers et seconds moyens de soustraction sont montés en parallèle et sont rendus alternativement actifs sous la dépendance de moyens (75, 76) comparant la vitesse de l'aéronef audit seuil de vitesse.

16. Système selon l'une quelconque des revendications 1 à 15,
caractérisé en ce que le dispositif (16) d'élaboration de l'ordre électrique unique de commande en roulis et le dispositif (18) d'élaboration de l'ordre électrique de commande en lacet comportent chacun un amplificateur supplémentaire ($\underline{m}$ ou $\underline{n}$) dont la sortie est reliée au sommateur (53 ou 54) correspondant, les entrées desdits amplificateurs supplémentaires ($\underline{m}$ et $\underline{n}$) étant reliées au commun à un dispositif (80) de correction de dissymétrie de poussée.

17. Système selon la revendication 16,
caractérisé en ce que le dispositif (80) de correction de dissymétrie de poussée comporte un intégrateur (82) dont la sortie alimente lesdits amplificateurs supplémentaires (m et n) et dont l'entrée peut être reliée, pour une première position d'un commutateur (83) à une tension nulle, et, pour une seconde position dudit commutateur, à une tension constante de référence, ce commutateur étant commandé par un dispositif de commande (84) qui lui fait prendre ladite seconde position pour une

13

EP 0 296 951 B1

condition de déclenchement représentative du fait que l'aéronef vole à cap constant, que le pilote a relâché le premier organe d'actionnement volontaire et que les surfaces de gauchissement sont trop braquées, ledit dispositif de commande (84) ramenant ledit commutateur (83) de sa seconde à sa première position dès que ledit premier organe d'actionnement volontaire est sollicité par le pilote et que le braquage des surfaces de gauchissement est proche de zéro.

18. Système selon la revendication 17,
caractérisé en ce que ladite condition de déclenchement inclue de plus que l'aéronef est stabilisé en roulis et que l'effort exercé sur ledit second organe d'actionnement volontaire est nul.

19. Système selon l'une des revendications 17 ou 18,
caractérisé en ce que le signe de la tension de référence dépend du sens de braquage des surfaces de gauchissement.

20. Système selon l'une quelconque des revendications 16 à 19,
caractérisé en ce que les gains desdits amplificateurs supplémentaires ($m$ et $n$) desdits dispositifs (16 et 18) d'élaboration des ordres électriques de commande en roulis et de commande en lacet sont commandables en fonction de la configuration de vol et de la vitesse dudit aéronef.

**Claims**

1. System for roll and yaw control of an aircraft (1) comprising wing warping surfaces (8, 9) actuated from a first intentional actuation member (14) and a rudder (11) actuated from a second intentional actuation member (15), by the intermediary of mechanical transmission (24), the said first and second intentional actuation members (14, 15) being associated with transducers (37, 39 - 41) respectively delivering electrical signals depending on the position of the said members, the said aircraft moreover comprising means (43, 47) capable of delivering electrical signals representative respectively of the roll speed, of the attitude, of the yaw speed and of the lateral side slip of the said aircraft, characterised in that it comprises:
   - a device (16) capable of producing - from the said electrical signals representative respectively of the position of the said first intentional actuation member, of the roll speed, of the attitude, of the yaw speed, of the lateral side slip and of the position of the second intentional actuation member - a single electrical roll control command formed by a linear combination of the said electrical signals;
   - a distribution device (20) which, from the said single electrical roll control command, controls each of the said wing warping surfaces by the intermediary of actuation means (21);
   - a device (18) capable of producing - from the said electrical signals representative respectively of the position of the said first intentional actuation member, of the roll speed, of the attitude, of the yaw speed, of the lateral side slip and of the position of the said second intentional actuation member - an electrical yaw control command formed by a linear combination of the said electrical signals; and
   - a device (23) making it possible to combine the said electrical yaw control command and a mechanical command originating directly from the said second intentional actuation member (15) by the intermediary of the said mechanical transmission (24), in order to deliver a single, combined yaw control command, which controls the said rudder (11), by the intermediary of actuation means (26).

2. System according to Claim 1, characterised in that the device (16) for producing the single electrical roll control command comprises a plurality of amplifiers ($a$ to $f$) whose inputs receive respectively the said electrical signals representative of the position of the said first intentional actuation member (14), of the roll speed, of the attitude, of the yaw speed, of the lateral side slip and of the position of the said second intentional actuation member (15), and whose outputs are taken in common to an adder (53) delivering the said single electrical roll control command.

3. System according to Claim 1, characterised in that the device (18) for producing the electrical yaw control command comprises a plurality of amplifiers ($g$ to $l$) whose inputs receive respectively the said electrical signals representative of the position of the said first intentional actuation member (14), of the roll speed, of the attitude, of the yaw speed, of the lateral side slip and of the position of the said

14

second intentional actuation member (15), and whose outputs are taken in common to an adder (54) delivering the said electrical yaw control command.

4. System according to any one of Claims 2 or 3, characterized in that each of the said amplifiers (a to f or g to l) of the said device for producing the single electrical roll control command or of the device for producing the electrical yaw control command is of the adjustable-gain type and in that the gain of the said amplifiers is controlled as a function of the configuration and of the speed of the aircraft.

5. System according to Claim 1, characterised in that the said device (20) for distribution of the single electrical roll control command is a table, which makes a deflection value of each of the said wing warping surfaces (8, 9) correspond to every value of the said single electrical command.

6. System according to Claim 1, characterised in that the said device (23) delivering a single combined yaw control command is constituted by a set of levers forming a deformable parallelogram one articulation (28) of which is fixed, the said electrical command and the said mechanical yaw control command being applied respectively to the two sides (27, 36) of the said parallelogram articulated around the said fixed articulation, while the single combined yaw control command is taken off on one (32) of the other sides of the said parallelogram.

7. System according to Claim 1, characterised in that it comprises means (47) for generating the said electrical signal representative of the lateral side slip from, on the one hand, electrical roll speed and yaw speed signals and from a lateral acceleration signal of the said aircraft and, on the other hand, deflection information from the rudder and from the wing warping surfaces.

8. System according to Claim 1, characterised in that it comprises a transducer (37) converting the tilting of the said first intentional actuation member (14) into a demanded roll speed, as well as an integrator device (39) converting the said demanded roll speed into an attitude datum value.

9. System according to Claim 8, characterised in that the said integrator device (39) comprises an integrator (63) and a phase-advance amplifier (65), whose inputs have a common point (66) receiving the said demanded roll speed and whose outputs are connected to an adder (64).

10. System according to Claim 9, characterised in that, between the said common point (66) and the input of the said integrator (63), is arranged a controlled changeover switch (57) capable of taking the input of the said integrator (63) either to the said common point (66), or to a generator (68) sending out a signal comprising the speed of variation of the real attitude, the said changeover switch (67) being controlled by the saturation of the wing warping surfaces, when the control column command is not zero.

11. System according to Claim 10, characterised in that the said generator (68) sends out a signal which is a linear combination of the first derivative and of the second derivative of the lateral attitude.

12. System according to any one of Claims 8 to 11, characterised in that, beyond an attitude threshold ($\phi s$), the transducer (37) associated with the said first intentional actuation member (14) delivers a demanded attitude value ($\phi d$), while below the said threshold this transducer (37) delivers a demanded roll speed and in that, between the output of the said transducer (37) and the said integrator device (39), are provided first means (70, 71, 72) capable of subtracting, from the signal coming from the said transducer (37), a correction signal (S) which is nil below the said threshold ($\phi s$), but which is a function of the attitude value actually attained by the aircraft (1) beyond the said threshold.

13. System according to Claim 12 characterised in that the said correction signal (s) is proportional to $\phi - \phi s$, if the attitude $\phi$ is positive and greater than the positive value $+ \phi s$ of the said threshold, and to $- \phi + \phi s$, if the attitude is negative and less than the negative value $- \phi s$ of the said threshold.

14. System according to any one of Claims 8 to 11, characterised in that, beyond a speed threshold (VMAX)of the aircraft (1), the transducer (37) associated with the said first intentional actuation member (14) delivers a demanded attitude value ($\phi d$), while below the said speed threshold this transducer (37) delivers a demanded roll speed and in that, between the output of the said transducer (37) and the said integrator device (39), are provided second means (70, 73, 74), capable of subtracting, from the signal

EP 0 296 951 B1

coming from the said transducer (37), a correction signal which is proportional to the actual attitude of the aircraft.

**15.** System according to Claims 12 and 14, characterised in that the said first and second subtraction means are mounted in parallel and are rendered alternatively active under the control of means (75, 76), comparing the speed of the aircraft with the said speed threshold.

**16.** System according to any one of Claims 1 to 15, characterised in that the device (16) for producing the single electrical roll control command and the device (18) for producing the electrical yaw control command each comprise a supplementary amplifier ($\underline{m}$ or $\underline{n}$) whose output is taken to the corresponding adder (53 or 54), the inputs of the said supplementary amplifiers ($\underline{m}$ and $\underline{n}$) being taken in common to a thrust asymmetry correction device (80).

**17.** System according to Claim 16, characterised in that the thrust asymmetry correction device (80) comprises an integrator (82) whose output supplies the said supplementary amplifiers (m and n) and whose input can be taken, for a first position of a changeover switch (83) to a zero voltage, and, for a second position of the said changeover switch, to a constant reference voltage, this changeover switch being controlled by a control device (84) which makes it take the said second position for a triggering condition representative of the fact that the aircraft is flying on a constant heading, that the pilot has released the first intentional actuation member and that the wing warping surfaces are too deflected, the said control device (84) bringing the said changeover switch (83) back from its second to its first position as soon as the said first intentional actuation member is loaded by the pilot and the deflection of the wing warping surfaces is close to zero.

**18.** System according to Claim 17, characterised in that the said triggering condition moreover includes that the aircraft is stabilised in roll and that the force exerted on the said second intentional actuation member is zero.

**19.** System according to one of Claims 17 or 18, characterised in that the sign of the reference voltage depends on the direction of deflection of the wing warping surfaces.

**20.** System according to any one of Claims 16 to 19, characterised in that the gains of the said supplementary amplifiers ($\underline{m}$ and $\underline{n}$) of the said devices (16 and 18) for producing electrical roll control and yaw control commands are controllable as a function of the flight configuration and of the speed of the said aircraft.

**Patentansprüche**

**1.** System zur Roll- und Schlingersteuerung eines Flugfahrzeugs (1) mit von einem ersten Betätigungsorgan (14) gesteuerten Rollflächen (8, 9) und einem von einem zweiten Betätigungsorgan (15) gesteuerten Seitenruder (11), über ein mechanisches Getriebe (24), wobei das erste und das zweite Betätigungsorgan (14, 15) Wandlern (37, 39 - 41) zugeordnet ist, die elektrische Signale jeweils entsprechend der Stellung der besagten Organe liefern, und wobei das besagte Flugfahrzeug weiterhin Mittel (43, 47) zum Liefern von elektrischen Signalen jeweils entsprechend der Rollgeschwindigkeit, der Trimmlage, der Schlingergeschwindigkeit und dem Seitwärtsschleudern des besagten Flugfahrzeugs aufweist, **dadurch gekennzeichnet,** daß es aufweist:
- eine Vorrichtung (16) zum Erzeugen eines einzigen elektrischen Befehls zur Rollsteuerung aus einer linearen Kombination der besagten elektrischen Signale jeweils entsprechend der Stellung des besagten ersten Betätigungsorgans, der Rollgeschwindigkeit, der Trimmlage, der Schlingergeschwindigkeit und dem Seitwärtsschleudern und der Stellung des besagten zweiten Betätigungsorgans;
- eine Verteilungsvorrichtung (20), die, ausgehend von dem besagten einzigen Befehl zur Rollsteuerung, jede der besagten Steuerflächen über Betätigungsmittel (21) steuert;
- eine Vorrichtung (18) zum Erzeugen eines elektrischen Befehls zur Schlingersteuerung aus einer linearen Kombination der besagten elektrischen Signale jeweils entsprechend der Stellung des besagten ersten Betätigungsorgans, der Rollgeschwindigkeit, der Trimmlage, der Schlingergeschwindigkeit und dem Seitwärtsschleudern und der Stellung des besagten zweiten Betätigungs-

16

organs; und

- eine Vorrichtung (23) zum Kombinieren des besagten elektrischen Befehls zur Schlingersteuerung und eines direkt vom zweiten Betätigungsorgan (15) über das besagte mechanische Getriebe (24) kommenden mechanischen Befehls zum Liefern eines einzigen, kombinierten Befehls zur Schlingersteuerung, der das besagte Seitenruder (11) über Betätigungsmittel (26) steuert.

2. System nach Anspruch 1,
**dadurch gekennzeichnet,**
daß die Vorrichtung zum Erzeugen des einzigen elektrischen Befehls zur Rollsteuerung eine Vielzahl von Verstärkern (a bis f) aufweist, deren Eingänge jeweils die besagten elektrischen Signale jeweils entsprechend der Stellung des besagten ersten Betätigungsorgans (14), der Rollgeschwindigkeit, der Trimmlage, der Schlingergeschwindigkeit und dem Seitwärtsschleudern und der Stellung des besagten zweiten Betätigungsorgans (15) empfangen und deren Ausgänge gemeinsam mit einem Summierglied (53) verbunden sind, das den besagten einzigen elektrischen Befehl zur Rollsteuerung liefert.

3. System nach Anspruch 1,
**dadurch gekennzeichnet,**
daß die Vorrichtung (18) zum Erzeugen des elektrischen Befehls zur Schlingersteuerung eine Vielzahl von Verstärkern (q bis l) aufweist, deren Eingänge jeweils die besagten elektrischen Signale jeweils entsprechend der Stellung des besagten ersten Betätigungsorgans (14), der Rollgeschwindigkeit, der Trimmlage, der Schlingergeschwindigkeit und dem Seitwärtsschleudern und der Stellung des besagten zweiten Betätigungsorgans (15) empfangen und deren Ausgänge gemeinsam mit einem Summierglied (54) verbunden sind, das den besagten einzigen elektrischen Befehl zur Schlingersteuerung liefert.

4. System nach einem der Ansprüche 2 oder 3,
**dadurch gekennzeichnet,**
daß jeder der besagten Verstärker (a bis f oder g bis l) der besagten Vorrichtung zum Erzeugen des einzigen elektrischen Befehls zur Rollsteuerung oder der Vorrichtung zum Erzeugen des elektrischen Befehls zur Schlingersteuerung vom in der Verstärkung regelbaren Typ ist und daß die Verstärkung der besagten Verstärker in Abhängigkeit von der Konfiguration und von der Geschwindigkeit des Flugfahrzeugs gesteuert wird.

5. System nach Anspruch 1,
**dadurch gekennzeichnet,**
daß die besagte Verteilungsvorrichtung (20) des einzigen Befehls zur Rollsteuerung ein Tisch ist, der jedem Wert des besagten einzigen Befehls zur Rollsteuerung einen entsprechenden Wert für den Ausschlag jeder der besagten Rollsteuerflächen (8, 9) zuordnet.

6. System nach Anspruch 1,
dadurch gekennzeichnet, daß die Vorrichtung (23) zum Liefern eines einzigen, kombinierten Befehls zur Schlingersteuerung aus einer ein verformbares Parallelogramm bildenden Hebelanordnung aufgebaut ist, von der ein Gelenk (28) fest ist, wobei der besagte elektrische Befehl und der besagte mechanische Befehl zur Schlingersteuerung jeweils auf die beiden um besagtes festes Gelenk drehbaren Seiten (27, 36) des besagten Parallelogramms aufgebracht wird, während der einzige, kombinierte Befehl zur Schlingersteurung auf einer (32) der anderen Seiten des besagten Parallelogramms abgegriffen wird.

7. System nach Anspruch 1,
dadurch gekennzeichnet, daß es Mittel (47) zum Erzeugen des besagten elektrischen Signals entsprechend dem Seitwärtsschleudern einerseits aus den elektrischen Signalen der Roll- und der Schlingergeschwindigkeit und einem Signal der seitlichen Beschleunigung des besagten Flugfahrzeugs und andererseits aus Ausschlaginformationen des Seitenruders und der Rollsteurflächen aufweist.

8. System nach Anspruch 1,
dadurch gekennzeichnet, daß es einen Wandler (37), der das Kippen des ersten Betätigungsorgans (14) in eine geforderte Rollgeschwindigkeit umwandelt, und eine Integrationsvorrichtung (39) aufweist, die die geforderte Rollgeschwindigkeit in einen Sollwert für die Trimmlage umwandelt.

9. System nach Anspruch 8, dadurch gekennzeichnet, daß die besagte Integrationsvorrichtung (39) einen Integrator (63) und einen Phasenvoreilungsverstärker (65) aufweist, dessen Eingänge einen gemeinsamen Punkt (66) haben, die besagte geforderte Rollgeschwindigkeit empfangen und dessen Ausgänge an einem Summierglied (64) vereinigt sind.

10. System nach Anspruch 9,
dadurch gekennzeichnet, daß zwischen dem gemeinsamen Punkt (66) und dem Eingang des besagten Integrators (63) ein gesteuerter Schalter (57) zum Verbinden des Eingangs des besagten Integrators (63) entweder mit dem gemeinsamen Punkt (66) oder einem ein Signal mit der Änderungsgeschwindigkeit der tatsächlichen Trimmlage aussendenden Generator (68) angeordnet ist, wobei der besagte Schalter (67) von der Sättigung der Rollsteuerflächen gesteuert wird, wenn der Befehl des Steuerknüppels ungleich Null ist.

11. System nach Anspruch 10,
dadurch gekennzeichnet, daß der besagte Generator (68) ein Signal aussendet, das eine lineare Kombination der ersten Ableitung und der zweiten Ableitung des seitlichen Trimmlage ist.

12. System nach einen der Ansprüche 8 bis 11,
dadurch gekennzeichnet, daß oberhalb einer Schwelle ($\Phi$s) für die Trimmlage der dem besagten ersten Betätigungsorgan (14) zugeordnete Wandler (37) einen Wert ($\Phi$d) für die geforderte Trimmlage liefert, während der Wandler (37) unterhalb der besagten Schwelle eine geforderte Rollgeschwindigkeit liefert, und daß zwischen dem Ausgang des besagten Wandlers (37) und der besagten Integrationsvorrichtung (39) erste Mittel (70, 71, 72) zum Abziehen eines Korrektursignals (S), das unterhalb der besagten Schwelle ($\Phi$s) Null, aber eine Funktion des Werts der tatsächlich vom Flugfahrzeug (1) oberhalb der besagten Schwelle erreichten Trimmlagenwert ist, von dem von dem besagten Wandler (37) ausgegebenen Signal vorgesehen sind.

13. System nach Anspruch 12,
dadurch gekennzeichnet, daß das besagte Korrektursignal (S) proportional zu $\Phi$ - $\Phi$s, wenn die Trimmlage $\Phi$ positiv und größer als der positive Wert +$\Phi$s ist, und proportional zu -$\Phi$ + $\Phi$s ist, wenn die Trimmlage $\Phi$ negativ und kleiner als der negative Wert -$\Phi$s der besagten Schwelle ist.

14. System nach einem der Ansprüche 8 bis 11,
dadurch gekennzeichnet, daß oberhalb einer Schwelle (VMO) für die Geschwindigkeit des Flugfahrzeugs (1) der dem besagten ersten Betätigungsorgan (14) zugeordnete Wandler (37) einen Wert ($\Phi$d) für die geforderte Trimmlage liefert, während der Wandler (37) unterhalb der besagten Schwelle für die Geschwindigkeit eine geforderte Rollgeschwindigkeit liefert, und daß zwischen dem Ausgang des besagten Wandlers (37) und der besagten Integrationsvorrichtung (39) zweite Mittel (70, 73, 74) zum Abziehen eines Korrektursignals, das proportional zur tatsächlichen Trimmlage ist, von dem von dem besagten Wandler (37) ausgegebenen Signal vorgesehen sind.

15. System nach den Ansprüchen 12 und 14,
dadurch gekennzeichnet, daß die ersten und die zweiten Mittel zum Subtrahieren parallel angebracht sind und abwechselnd in Abhängigkeit von die Geschwindigkeit des Flugfahrzeugs mit der besagten Schwelle für die Geschwindigkeit vergleichenden Mitteln (75, 76) aktiviert werden.

16. System nach einem der Ansprüche 1 bis 15,
dadurch gekennzeichnet, daß die Vorrichtung (16) zum Erzeugen des einzigen elektrischen Befehls zur Rollsteuerung und die Vorrichtung (18) zum Erzeugen des elektrischen Befehls zur Schlingersteuerung jeweils einen zusätzlichen Verstärker ($\overline{m}$ oder $\overline{n}$) aufweisen, dessen Ausgang mit dem Summierglied (53 oder 54) verbunden ist, wobei die Eingänge der besagten zusätzlichen Verstärker ($\overline{m}$ oder $\overline{n}$) gemeinsam mit einer Vorrichtung (80) zut Korrektur der Schub-Asymmetrie verbunden sind.

17. System nach Anspruch 16,
dadurch gekennzeichnet, daß die Vorrichtung (80) zur Korrektur der Schub-Asymmetrie einen Integrator (82) aufweist, dessen Ausgang die besagten zusätzlichen Verstärker ($\overline{m}$ oder $\overline{n}$) versorgt und dessen Eingang in einer ersten Stellung eines Schalters (83) mit einer Spannung Null verbunden werden kann und in einer zwei ten Stellung des besagten Schalters mit einer konstanten Referenzspannung verbunden werden kann, wobei dieser Schalter von einer Steuervorrichtung (84) gesteuert wird, die ihn in einer Auslösebedingung entsprechend der Tatsache, daß das Flugfahrzeug mit festem Kurs fliegt, daß der Pilot das erste Betätigungsorgan freigegeben hat und daß die Rollsteuerflächen zu stark ausgeschwenkt sind, die besagte zweite Stellung einnehmen läßt, wobei die besagte Steuervorrichtung (84) den besagten Schalter (83) aus seiner zweiten in seine erste Stellung zurückführt, sobald das besagte erste Betätigungsmittel vom Piloten betätigt wird und der Ausschlag der Rollsteuerflächen nahe Null ist.

18. System nach Anspruch 17,
dadurch gekennzeichnet, daß die besagte Auslösebedingung weiterhin beinhaltet, daß das Flugfahrzeug im Hinblick auf die Rollbewegung stabilisiert wird und daß die auf das besagte zweite Betätigungsorgan ausgeübte Kraft Null ist.

19. System nach einem der Ansprüche 17 oder 18,
dadurch gekennzeichnet, daß das Vorzeichen der Referenzspannung von der Richtung des Ausschlags der Rollsteuerflächen abhängt.

20. System nach einem der Ansprüche 16 bis 19,
dadurch gekennzeichnet, daß die Verstärkungen der besagten zusätzlichen Verstärker ($\overline{m}$ oder $\underline{n}$) der besagten Vorrichtungen (16 und 18) zum Erzeugen der elektrischen Befehle zur Rollsteuerung und zur Schlingersteuerung in Abhängigkeit von der Konfiguration des Flugs und der Geschwindigkeit des besagten Flugfahrzeugs steuerbar sind.

*Fig. 1*

*Fig. 3a*

*Fig. 3b*

*Fig. 3c*

Fig. 2

Fig.4

57

56

58

→ 47

20a

55

Fig.5

$\dot{\phi}_c$

38

66

65

63

39

64

$\Phi_c$

40

Fig.6

$\dot{\phi}_c$

38

66 67

65

63

39

64

$\Phi_c$

40

68

69

$\phi''$ $\phi'$

43

17

22

EP 0 296 951 B1

**Fig: 7**

**Fig: 8**

23

Fig. 9

Fig. 10